Europäisches Patentamt

European Patent Office

Office européen des brevets

(11) Publication number: **0 130 941**
A1

# EUROPEAN PATENT APPLICATION

(21) Application number: 84810292.7

(22) Date of filing: 15.06.84

(51) Int. Cl.⁴: **B 41 J 3/53**, G 06 F 3/023

(30) Priority: 20.06.83 CH 3348/83

(43) Date of publication of application: 09.01.85 Bulletin 85/2

(84) Designated Contracting States: AT BE DE FR IT LU NL SE

(71) Applicant: **E.S.P. Elektronische Spezialprojekte Aktiengesellschaft, FL-9495 Triesen (LI)**

(72) Inventor: **Gornati, Graziano, Via Sorgenti 31, I-21100 Varese (IT)**

(74) Representative: **Baggiolini, Raimondo et al, Racheli & Flammenghi Via San Gottardo 15, CH-6900 Lugano (CH)**

(54) Electronic equipment for automatic writing of Chinese, Sino-Japanese and Japanese ideograms.

(57) The equipment makes it possible to do what has not been possible so far: to write in Chinese or Sino-Japanese (about 3,000 current ideograms and 40,000 total instead of the 26 letters of our alphabet) with a standard electronic typewriter, a printer of known writing device. It comprises: a keyboard for simultaneous keying of the sounds and tones that constitute the syllables corresponding to each ideogram of the Chinese or Sino-Japanese language so that at each stroke a precise ideogram is generated, at least a microprocessor, at least a video or display, at least a writer or printer for writing the ideograms corresponding to each syllable input in the keyboard and generated by the microprocessor.

The keyboard is made so that simultaneously with the sounds of the syllable, a signal is punched (keys C4) that indicates the tone of the syllable, enabling the microprocessor to make automatic identification and the relative printing or projection of the ideograms corresponding to that syllable and that tone.

Electronic equipment for automatic writing of Chinese, Sino-Japanese and
Japanese ideograms

This invention has as its object electronic equipment for automatic writing of Chinese, Sino-Japanese and Japanese ideograms that makes it possible to do what so far has not been possible, i.e., to write especially in Chinese and in Sino-Japanese with a standard electronic typewriter or with a printer, or with a current known type writing device.

The difficulty of writing directly in one of these languages actually depends on the enormous number of ideograms that they comprise, about 3,000 current ones and a total of 40,000, instead of the 26 letters of our alphabet.

The obstacle is overcome with the equipment according to this invention characterized:

by a keyboard for simultaneous keying of the sounds and tones that constitute the syllables corresponding to each ideogram of the Chinese or Sino-Japanese language so that a precise ideogram is generated at each stroke, by at least a microprocessor, by at least a video or display, by at least a writer or printer for writing the ideograms corresponding to each syllable input on the keyboard and generated by the microprocessor to be projected on a video or display or printed by a printer.

According to a preferred embodiment, the keyboard is made so that, simultaneously with the sounds of the syllable, a single signal is punched which indicates the tone of the syllable, making possible, in the microprocessor, the automatic identification and relative printing or projection of the ideograms corresponding to that syllable and that tone. Further, the microprocessor is such that each time the operator strikes a succession of sounds concluded or defined by a tone, it seeks in its storage, the corresponding ideogram and _____

0130941

presents it on the video or display, proceeding to printing or storage as produced text, when the operator does not send a cancellation signal, producing the ideograms by their storage in a complete manner or by a parametric representation of each sign or element of the ideogram.

For a better understanding, the general features relating to Chinese writing, the problem to be solved and the solution of the problem according to the invention, on the basis of the accompanying diagrammatic drawing of the keyboard will be explained below.

General features

Chinese writing can be represented phonetically by Roman characters. (According to the Pin Yin notation or Wade-Giles notation.)

However, the more complex problem and which will be discussed is the representation of Chinese ideograms by a typewriter.

Actually, in writing of ideograms every syllable has a complete meaning and every syllable is represented by an ideogram different from all others.

In particular, the syllables of Chinese, though equal in sound, can have 4 different tones of pronunciation, or can be atonal.

Example:

in = cause 因                    ae = pain 哀

in = silver 銀                   ae = to endure 挨

in = induce 引                   ae = low 矮

in = print 印                    ae = to love 愛

It is also possible for syllables with the same sounds and the same tone to have several meanings, therefore several ideograms; similar cases are found in other languages: for example, pass (verb), pass (noun); past (time), past (verb).

a)  In ideographic writing, different Chinese concepts have different representations while having the same syllable with the same tone. Example:

Tsae = talent = 才

Tsae = riches = 財

Tsae = to cut = 裁

The distinction and attribution of the correct ideogram is linked to the sense, exactly as with homophones of various languages.

Tsae = talent 才                         ability = 才能   Tsae neng

b)  There are cases of atonal syllables:

wa    哇                                  .ne   呢

c)  There are also tonal syllables with a final "r" sound 兒   that have the function of changing (embellishing them as a form of endearment) or characterizing terms.

garden 花園                          little garden 花園兒

The Chinese language, although being based on syllabic radicals, to which ideograms with full meaning correspond, with the development and enrichment of terms has had to construct words formed from several syllables.

From the ideographic viewpoint, a word of several syllables consists of a succession corresponding to the syllabic ideograms that form it, but always written at equal distance.

Train = 火车 (húcchē)         huǒ (fire)              chē (vehicle)

Automobile = 汽车 (qì chē)    qì (gas)               chē (vehicle)

Radio = 无線电 (wú xiàn diàn)  wú (negative prefix)    xiàn (wire)

diàn (electricity)

### The problem

1) By typing syllables, to represent various ideograms which are always different.

2) To represent sounds and tones in the syllable simultaneously.

3) In case of multiple ideograms for the same sound and tone, to allow the operator to choose the desired ideogram from the various possibilities.

### The solution

The equipment according to this invention consists substantially in:

A keyboard, made up of basic parts A, B, C, comprises 39 keys, with the possibility of hitting several keys simultaneously to form syllables.

There are keys to represent sounds and keys to represent tones.

Of characteristic importance is the fact that for each syllable it is possible to determine simultaneously the sounds and tones by hitting suitable keys.

A microprocessor (not shown)

Processing takes place according to the following basic scheme:

1) The signals coming from the keyboard are decoded: decoding comprises both the sound and its tone. In fact the tone is the last to be read and determines for the microprocessor the completion of the syllable and the start of successive processing steps.

2) The microprocessor identifies in its storage the ideogram corresponding to the syllable received or, alternatively, it takes the parameters for composing the ideograms and sends it to the video (or display) (also not shown). The ideogram can therefore be read by the operator who can possibly cancel it with a cancellation operation (key C).

If there are no cancellation operations, the microprocessor will order the printing of it by the printer.

3)  When there are several ideograms for the same syllable, the microprocessor automatically sends onto the video the most frequently used ideogram.

If the operator requests it, by a keyboard command (command M), it sends onto the screen in succession all the ideograms stored for that syllable with that tone at each stroke.

The microprocessor proceeds to order printing of the ideogram selected by the operator by a suitable command (key N of the keyboard), or when the operator keys other syllables, it writes the last ideogram sent onto the video.

4)  The microprocessor proceeds to control the printer either for printing in a horizontal line or possibly for printing in a vertical line (command L on the keyboard).

5)  In case of vertical printing, the microprocessor accumulates a page at a time and then proceeds to its execution.

A video

The video can be a page video or a line display; it causes the last typed ideograms to appear; as the ideograms come from the video they are automatically accepted for printing.

When the operator wishes to cancel one or more ideograms, he presses key C which cancels the last ideogram or progressively all the ideograms that have not been printed.

A printer

The printer is guided by the microprocessor.

It normally prints in a horizontal line.

With a particular order, it can also print in a vertical column according to the ancient custom  of Chinese writing, although it has now been abandoned.

Printing can also be by the page.

## Logic of the invention

The keyboard makes it possible to write any possible syllable in the Chinese language with a single stroke.

In particular, it also makes it possible to write the tone of pronunciation of the syllables, in addition to the syllables.

The simultaneous definition of the sounds and tones is a characteristic element of the keyboard according to the invention.

Actually, the "complete syllable" signal is determined by striking the "tone."

Tones of the Chinese language can be identified with Roman characters in several ways:

| | | | | |
|---|---|---|---|---|
| a) with numbers | $ma^1$. | $ma^2$ | $ma^3$ | $ma^4$ |
| b) with accents | $\bar{ma}$ | $má$ | $m\breve{a}$ | $mà$ |
| c) with addition of a letter | mha | ma | maa | mah |

Selection of either notation makes no difference for this invention, since the tone are identified by the keys with the following structure:

    -- tone 1 ⎯           key 37/39

    -- tone 2 ╱           key 38

    -- tone 3 ⌣           key 38/39

    -- tone 4 ╲           key 39

    -- atonal syllable           key 37

The solution chosen is, however, not the only one. The characterizing, basic and inventive idea is the simultaneous striking of sounds and the tone of the syllable.

Actually, it is possible to obtain the indication of the tone of the syllable by striking the tonal accent along with the vowel.

i.e.:

Vowels (sector $b_2$ + accent sector $c_1$)

| | | |
|---|---|---|
| key 20  = A | keys 20/24    = Ā | keys 20/24/25  = Á |
| | "    20/26/27 = Ă | "    20/24/29  = À |
| "  21  = I | "    21/23    = Ī | "    21/24/25  = Í |
| | "    21/26/27 = Ĭ | "    21/24/29  = Ì |
| "  22  = O | "    22/24    = Ō | "    22/24/25  = Ó |
| | "    22/26/27 = Ŏ | "    22/24/29  = Ò |
| "  23  = E | "    23/24    = Ē | "    23/24/25  = É |
| | "    23/26/27 = Ě | "    23/24/29  = È |
| keys 23/21 = U | "    23/21/24 = Ū | "    23/21/24/25 = Ú |
| | "    23/21/26/27 = Ŭ | "    23/21/24/29 = Ù |

The same possibility exists for forming the tonal accent on vowels of sector $b_1$.

| | | |
|---|---|---|
| key 16  = O | keys 16/24    = Ö | keys 16/24/25 = Ó |
| | keys 16/26/27 = Ŏ | keys 16/24/29 = Ò |

the same also applies to the other vowels.

However, it is considered preferable to use keys 37, 38, 39 as in the first indication.

DETAILED DESCRIPTION OF THE KEYBOARD

AND THE CODES TO BE USED

The keyboard is divided into sectors.

The keys of each sector can be hit individually or in groups of two or more to form letters or significant symbols.

The keys of different sectors can be hit simultaneously to generate various elements of the same syllable simultaneously.

The keyboard is divided into the following sectors:

-- a (comprising keys $a_1$, $a_2$, $a_3$)

-- $b_1$ and $b_2$

-- $c_1$, $c_2$, $c_3$, $c_4$

-- D

Sectors a and $b_1$ are hit with the left hand.

Sectors $b_2$ and c (1, 2, 3, 4) are hit with the right hand.

Sector D can be hit with either hand.

The keys of the various sectors are hit simultaneously, depending on the requirements to form a syllable at each stroke.

Sector A

Relates to keys 1, 2, 3, 4, 5, 6, 7, 8, 9, 10, 11, 12, 13, 14, 15.

The first sound of syllables, excluding vowels, is indicated in this sector.

Correspondence to the various sounds is the following:

| with Pin Yin notation | | | with Wade-Giles notation |
|---|---|---|---|
| key | 2 | = ZH | CH |
| " | 5 | = CH | CH' |
| " | 8 | = SH | SH |
| " | 11 | = L | L |
| " | 11 | = N | N |
| " | 1 | = [o⸜  (open parentheses) | [o⸜  (open parentheses) |
| " | 7 | = F | F |
| " | 10 | = R | J |
| " | 13 | = Q | CH' |
| " | 3 | = Z | TS |
| " | 6 | = K | K' |
| " | 9 | = S | S |
| " | 12 | = T | T' |
| " | 15 | = D | T |
| keys | 4/5 | = X | HS |
| " | 7/8 | = W | W |
| " | 10/11 | = Y | Y |
| " | 13/14 | = J | CH |
| " | 5/6 | = C | TS' |
| " | 8/9 | = G  (8/9/5/6 = DG) | K |
| " | 11/12 | = P | P' |
| " | 14/15 | = M | M |
| " | 11/14 | = H | H |

0130941

<u>Sector $b_1$</u>

It relates to keys 16, 17, 18, 19 and serves to indicate the sound of the first of a pair of consecutive vowels.

|   |   |   |   |   |
|---|---|---|---|---|
| <u>a</u>e | <u>o</u>a | <u>i</u>u | <u>e</u>i | eee. |

key  16    = 0

"    17    = E

"    18    = A

"    19    = I

keys 17/19  = U

<u>Sector $b_2$</u>

It relates to keys 20, 21, 22, 23 and indicates the sound of vowels in syllables with a single vowel:

|   |   |   |   |   |
|---|---|---|---|---|
| an | in | pin | ti | po |

or the second vowel of a pair of vowels:

|   |   |   |   |
|---|---|---|---|
| a<u>e</u> | o<u>a</u> | i<u>u</u> | e<u>i</u> |

key 20     = A

key 21     = I

key 22     = 0

key 23     = E

keys 23/21  = U

### Sector $c_1$

Indicates possible $3^\wedge$ vowel and the accents of tones in the case of phonetic writing in Roman characters.

| | |
|---|---|
| 24 | = — |
| 25 | = A |
| 26 | = I |
| 27 | = ∨ |
| 28 | = O |
| 29 | = E |
| 24/25 | = ╱ |
| 26/27 | = ‿ |
| 24/29 | = ╲ |
| 24/25 | = ‵′ |
| 26/27 | = ′′ |
| 26/29 | = U |

Sector $c_2$

It relates to keys 30, 31, 33, 34, 36.

30      = !

31      = N

33      = ?

34      = NG

36      = ⌐

30/31   = o   point

33/34   = ,

30/33   = o   new paragraph

30/33/36 = .........

F = fixed indentation of beginning of line,

G = front continuous spacing,

H = back continuous spacing,

L = automatic placing of ideograms in vertical column,

M = memory: the machine at each command of the key sends onto the video the ideograms corresponding to the syllable input on the keyboard,

N = order to print ideogram shown on video,

O = arrangement of tabulation,

P = cancellation of tabulation points,

Q = tabulation

It is therefore provided:

-- that on the equipment in question, the microprocessor sends onto the video or display the ideographic signs corresponding to each syllable  and when there are several ideograms for the same syllable or same tone, it sends, in succession, all the ideograms stored in order of frequency, then waits for the confirmation from the operator for one of them, a confirmation that can also be given by simply keying a syllabic sound;

-- that the code for keying the sounds is such that, regardless of the type of phonetic notation adopted or known to the writer (Pin Yin, Wade-Giles, etc), writing of the sound-syllables does not involve different learning;

-- that the system of codes and keyboard adopted makes possible the writing of ideograms at practically the same speed at which they are pronounced, provided no more than 400/500 syllables are pronounced per minute;

-- that the terms corresponding to the concepts defined by the ideograms are stored in an additional microprocessor in one or more languages so that the equipment can produce the ideograms and the corresponding concepts in the languages selected in parallel on different printers or videos;

-- that with suitable variations of the stored ideograms or their parametric indication, kanij writing, i.e., ideographic writing of the Japanese language, is represented along with and parallel to the hiragana and katakana writings of Japanese.

All of the above always within the scope of protection of the invention.

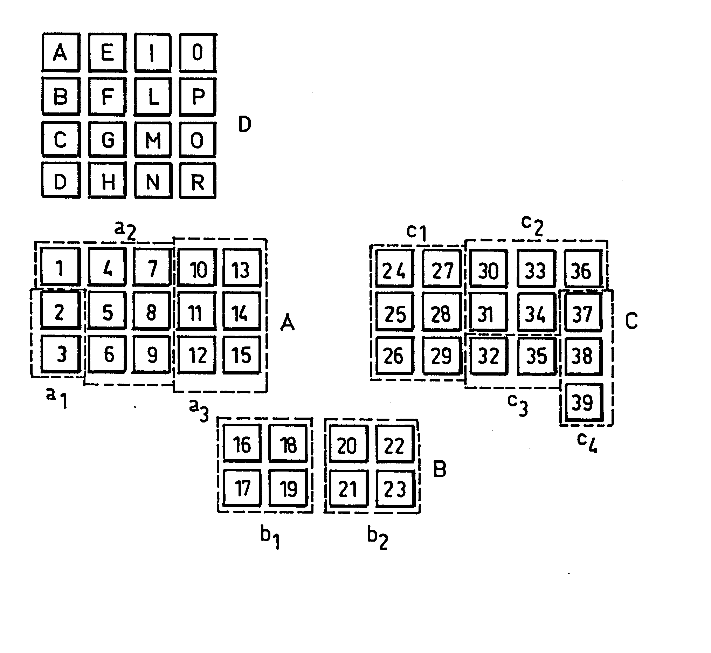

## Claims

1. Electronic equipment for automatic writing of Chinese, Sino-Japanese and Japanese ideograms, characterized by a keyboard for simultaneous keying of the sounds and tones that constitute the syllables corresponding to each ideogram of the Chinese or Sino-Japanese language, so that at each stroke a precise ideogram is generated, by at least a microprocessor, by at least a video or display, by at least a writer or printer for writing of the ideograms corresponding to each syllable keyed on the keyboard and generated by the microprocessor to be projected on a video or display or printed by a printer.

2. Electronic equipment as in claim 1, wherein the keyboard is made so that, simultaneously with the sounds of the syllable, a signal is hit that indicates the tone of the syllable, making possible, on the microprocessor, automatic identification and the relative printing or projection of the ideograms corresponding to that syllable and tone.

3. Electronic equipment as in claims 1, 2, wherein the microprocessor is such that, each time the operator strikes a succession of sounds concluded or defined by a tone, it searches in its storage for the corresponding ideogram and exhibits it on the video or display by proceeding to writing or printing or storing it as produced text, when the operator does not send a cancellation signal.

4. Electronic equipment as in claims 1, 2, 3, wherein the microprocessor produces the ideograms by storing them in a complete form.

5. Equipment as in claims 1, 2, 3, wherein the microprocessor produces ideograms by storing them in a parametric representation of each sign or element of the ideogram.

6. Electronic equipment as in claims 1 to 5, wherein the microprocessor

- 15 - 0130941

sends onto the video or display the ideographic signs corresponding to each syllable and when there are several ideograms for the same syllable and on the same tone, it sends, in succession, all the ideograms stored in order of frequency, then waits for confirmation from the operator for one of them, a confirmation that can be given by simply keying in a new syllabic sound.

7. Electronic equipment as in claims 1 to 6, wherein the code for keying the sounds is such that, regardless of the type of phonetic notation adopted or known to the writer - Pin Yin, Wade-Giles, etc. - the writing of the sound-syllables does not require different learning and/or successive indications.

8. Electronic equipment as in claims 1 to 7, wherein the code system and keyboard adopted make writing of the ideograms possible at practically the same speed with which they are pronounced, if not more than 400/500 syllables per minute are pronounced.

9. Equipment as in claims 1 to 8, characterized by an additional microprocessor in which are stored, in one or more languages, the terms corresponding to the concepts defined by the ideograms, so that it can produce, the ideogram and corresponding concepts in the selected languages, in parallel, on separate writers or printers or videos.

10. Electronic equipment as in claims 1 to 9, wherein Kanij, i.e., the ideographic writing of the Japanese language, is represented, along with and parallel to the Hiragana and Katakana writings of the same language with adequate variations of the stored ideograms or their parametric indication.

0130941

| A | E | I | O |
|---|---|---|---|
| B | F | L | P |
| C | G | M | O |
| D | H | N | R |

D

$a_2$

| 1 | 4 | 7 | 10 | 13 |
|---|---|---|----|----|
| 2 | 5 | 8 | 11 | 14 |
| 3 | 6 | 9 | 12 | 15 |

A

$a_1$          $a_3$

| 16 | 18 | 20 | 22 |
|----|----|----|----|
| 17 | 19 | 21 | 23 |

B

$b_1$          $b_2$

$c_1$          $c_2$

| 24 | 27 | 30 | 33 | 36 |
|----|----|----|----|----|
| 25 | 28 | 31 | 34 | 37 |
| 26 | 29 | 32 | 35 | 38 |
|    |    |    |    | 39 |

C

$c_3$

$c_4$

0130941

Application number

**European Patent Office**

**EUROPEAN SEARCH REPORT**

| DOCUMENTS CONSIDERED TO BE RELEVANT | | | EP 84810292.7 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| P,X | <u>GB - A - 2 121 220</u> (TIMOTHY DAYER HUANG)<br><br> * Totality *<br><br>-- | 1-6 | B 41 J 3/53<br>G 06 F 3/023 |
| X | <u>DE - A1 - 3 142 138</u> (SIEMENS)<br><br> * Totality *<br><br>-- | 1-6 | |
| P,A | <u>EP - A1 - 0 087 871</u> (BOCK)<br><br> * Claims *<br><br>---- | 1-6 | |
| | | | **TECHNICAL FIELDS SEARCHED (Int. Cl. ³)**<br><br>B 41 J 3/00<br>B 41 J 5/00<br>G 06 F 3/00 |

| The present search report has been drawn up for all claims | | |
|---|---|---|
| **Place of search**<br>VIENNA | **Date of completion of the search**<br>20-09-1984 | **Examiner**<br>WITTMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82